# EUROPÄISCHE PATENTSCHRIFT

(11) **EP 2 541 502 B1**
(45) Veröffentlichungstag und Bekanntmachung des Hinweises auf die Patenterteilung: **21.08.2013**
(21) Anmeldenummer: 11450085.3
(22) Anmeldetag: 29.06.2011
(51) Int. Cl.: G07B 15/06

(54) **Verfahren zum Ermitteln von Mautgebühren in einem Straßenmautsystem**
Method for acquiring toll fees in a road toll system
Procédé de détermination du paiement automatique dans un système de péage routier

(43) Veröffentlichungstag der Anmeldung: 02.01.2013
(73) Patentinhaber: Kapsch TrafficCom AG, 1120 Wien (AT)
(72) Erfinder: Tijink, Jasja, 2384 Breitenfurt (AT); Kersten, Jan, 71570 Oppenweiler (DE)
(74) Vertreter: Weiser, Andreas

(56) Entgegenhaltungen:
- EP-A1- 2 325 807
- EP-A2- 0 802 509
- US-A- 5 767 505

## Beschreibung

Die vorliegende Erfindung betrifft ein Verfahren zum Ermitteln von Mautgebühren für Fahrzeuge in einem Straßenmautsystem, das fahrzeuggestützte Onboard-Units mit jeweils einer eindeutigen Kennung und örtlich verteilte Baken mit jeweils einem bekannten Ort umfasst, wobei die Baken passierende Onboard-Units auf ihren Bakenort lokalisieren, um daraus eine ortsbezogene Mautgebühr zu berechnen, und über Funk mit diesen kommunizieren können.

Straßenmautsysteme dieser Art verorten Fahrzeuge, genauer deren Onboard-Units (OBUs), mit Hilfe eines Netzes geografisch verteilter Baken, z.B. Funkbaken kurzer Reichweite. Jede Bake erzeugt bei der Passage einer Onboard-Unit einen Transaktions-Datensatz für eine Abrechnungszentrale des Straßenmautsystems, welcher die Kennung der Onboard-Unit und die Kennung der Bake enthält und damit den Aufenthalt des Fahrzeugs belegt. Mit diesen Daten kann in der Zentrale ein Abrechnungskonto des Benutzers mit einer ortsbezogenen Weg-, Zeit- oder Gebietsmaut belastet werden. Derartige Straßenmautsysteme zeichnen sich durch hohe Zuverlässigkeit und hohen Mauterfassungsgrad aus, könnten jedoch den Weg eines Fahrzeugs in der Zentrale mitverfolgen lassen, was aus Sicht des Datenschutzes problematisch sein kann.

Die Erfindung setzt sich zum Ziel, ein Verfahren zum Ermitteln von Mautgebühren in einem Straßenmautsystem der genannten Art zu schaffen, welches verbesserten Datenschutz für die sensiblen Bewegungsdaten der Fahrzeuge gegenüber der Zentrale des Systembetreibers bietet. Dieses Ziel wird mit einem Verfahren der einleitend genannten Art erreicht, welches umfasst:
in einer Onboard-Unit:
   - Bereitstellen eines Speichers für einen Mautgebührenstand und einen Gültigkeitszeitraum hiefür in der Onboard-Unit;
bei der Passage der Onboard-Unit an einer Bake, in der Bake:
   - Auslesen zumindest der Kennung, des Mautgebührenstandes und des Gültigkeitszeitraums aus der Onboard-Unit als Datensatz;
   - wenn der Gültigkeitszeitraum abgelaufen ist: Rücksetzen des Mautgebührenstandes;
   - Erhöhen des Mautgebührenstandes, um den Datensatz zu aktualisieren, und Speichern des letzteren in der Onboard-Unit und der Bake;
   - Senden einer Aufforderung zur Löschung von gespeicherten Datensätzen dieser Kennung an andere Baken;
   - wenn innerhalb des Gültigkeitszeitraums keine Löschungsaufforderung für den gespeicherten Datensatz von anderen Baken einlangt: Senden des Datensatzes von der Bake an die Zentrale;
   - Löschen des Datensatzes in der Bake.

Die Erfindung schafft erstmals eine sichere Datenschutzlösung für zentral abgerechnete ("post-paid") Onboard-Units, welche durch ein verteiltes Bakennetz verortet werden. Der Mautgebührenstand einer Onboard-Unit wird mit Hilfe der Onboard-Unit selbst von Bake zu Bake weitertransportiert und nur die jeweils letzte Bake einer ununterbrochenen Kette von aufeinanderfolgenden Gültigkeitszeiträumen sendet den akkumulierten Mautgebührenstand an die Zentrale. Die jeweils letzte Bake ergibt sich automatisch aus einer Unterbrechung der Kette von Gültigkeitszeiträumen: Jede Bake speichert über den letzten Gültigkeitszeitraum den bislang akkumulierten Mautgebührenstand, und wenn innerhalb des Gültigkeitszeitraums keine Löschungsaufforderung bzw. Nachricht von einer anderen Bake kommt, dass diese den Mautgebührenstand weiter erhöht hat, dann entscheidet die Bake, dass sie die letzte einer Kette ist, und veranlasst die Absendung des akkumulierten Mautgebührenstandes an die Zentrale. Die in den Baken gespeicherten Datensätze werden somit in jedem Fall entweder bei Einlangen einer Löschungsaufforderung von einer anderen Bake oder nach dem Verstreichen des Gültigkeitszeitraums und dem Absenden an die Zentrale gelöscht. Auf diese Weise bleibt die Kenntnis ortsbezogener einzelner Transaktionen gegenüber der Zentrale verborgen.

Die Gültigkeitszeiträume werden zweckmäßigerweise so gewählt, dass bei einer durchschnittlichen Fahrtgeschwindkeit eines Fahrzeugs von einer Bake zur nächsten der Gültigkeitszeitraum des letzten Mautgebührenstandes noch nicht abgelaufen ist, wenn die Onboard-Unit die nächste Bake erreicht. Dadurch erfolgt nur in Ausnahmefällen, z.B. bei einem Anhalten während der Fahrt, einem Abzweigen auf eine andere Straße usw., ein Ablauf des Gültigkeitszeitraums, d.h. eine Unterbrechung der Kette und damit Versendung des Mautgebührenstandes an die Zentrale.

In der Zentrale sammeln sich somit in der Regel nur solche Datensätze an, die jeweils einen über mehrere Bakenorte akkumulierten Mautgebührenstand enthalten und daher keine genauen Rückschlüsse mehr auf die einzelnen Bakenorte zulassen. Im Ergebnis wird hohe Datensicherheit bzw. Vertraulichkeit für die sensiblen Bewegungsdaten der Onboard-Units bei gleichzeitiger Erhaltung der Post-Pay-Abrechnungsfunktionalität in der Zentrale erreicht.

Besonders günstig ist es, wenn die Baken untereinander über ein erstes Netzwerk und mit einer Zentrale des Straßenmautsystems über ein zweites Netzwerk in Verbindung stehen und das Senden der Löschungsaufforderung an die anderen Baken über das erste Netzwerk und das Senden des Datensatzes an die Zentrale über das zweite Netzwerk erfolgt. Durch die Trennung der Netzwerke kann ein allfälliges Abhören des Datenverkehrs zwischen den Baken durch die Zentrale verhindert werden, was Missbrauchsmöglichkeiten weiter reduziert. Die Trennung der Netzwerke kann dabei logisch und/oder physisch, z.B. durch unterschiedliche kabelgebundene Datenleitungen, unterschiedliche Datenkanäle in einem Funknetz, unterschiedliche Funknetztechnologien oder unterschiedliche Verschlüsselungen realisiert werden.

Eine besonders vorteilhafte Ausführungsform der Erfindung zeichnet sich durch die folgenden zusätzlichen Schritte aus:
in der Onboard-Unit:
   - Bereitstellen eines Speichers für einen Gesamtzähler und einen Abschnittszähler in der Onboard-Unit;
in der Bake:
   - Auslesen des Gesamt- und des Abschnittszählers aus der Onboard-Unit in den Datensatz;
   - Rücksetzen des Abschnittszählers, wenn der Gültigkeitszeitraum abgelaufen ist;
   - Erhöhen des Gesamt- und des Abschnittszählers beim Aktualisieren des Datensatzes und Speichern des letzteren in der Onboard-Unit und der Bake;
in der Zentrale, wenn zwei Datensätze mit derselben Kennung einlangen:
   - Löschen des Datensatzes mit dem niedrigeren Gesamtzähler, wenn die Differenz der Gesamtzähler beider Datensätze ungleich dem Abschnittszähler des Datensatzes mit dem höheren Gesamtzähler ist.

Mit dieser Ausführungsform können Restfehler in bestimmten Zeitkonstellationen verhindert werden, u.zw. wenn aufgrund von Verarbeitungslatenzen in den Baken oder Übertragungslatenzen zwischen den Baken die Löschungsaufforderung einer nächsten Bake geringfügig - z.B. um Millisekunden - zu spät in einer vorangegangenen Bake einlangt, sodass diese ihren Datensatz bereits an die Zentrale abgesendet hat, obwohl die nächste Bake den Mautgebührenstand weiterübernommen hat. In diesem Fall könnten zwei sich hinsichtlich der passierten Mautbaken überlappende Datensätze in der Zentrale einlangen, wodurch Abrechnungsfehler entstehen würden. Die erfindungsgemäße Auswertung eines gesamthaften und eines abschnittweisen Transaktionszählers verhindert solche seltene latenzbedingte Phänomene.

In einer ersten Variante der Erfindung wird der Mautgebührenstand jeweils um einen festen Wert erhöht und der Abschnittszähler kann dadurch aus dem Mautgebührenstand selbst, u.zw. durch Teilung durch den genannten festen Wert, abgeleitet werden. Dadurch erübrigt sich ein gesonderter Speicherplatz für einen eigenen Abschnittszähler.

In einer zweiten besonders bevorzugten Variante wird der Mautgebührenstand jeweils um einen variablen Wert erhöht, welcher abhängig von Messdaten, die an einem die Onboard-Unit mitführenden Fahrzeug gemessen werden, bestimmt wird. Dadurch kann z.B. eine von den Abmessungen, der Achsanzahl, dem Aussehen, der Beladung, der Insassenzahl, der Geschwindigkeit usw. des Fahrzeugs abhängige Mautgebühr verrechnet werden.

In einer dritten besonders bevorzugten Variante, welche alternativ oder zusätzlich eingesetzt werden kann, wird der Mautgebührenstand jeweils um einen variablen Wert erhöht, welcher abhängig von Speicherdaten, die aus der Onboard-Unit ausgelesen werden, bestimmt wird. So kann die Onboard-Unit beispielsweise Daten ihres Fahrzeugs wie Abmessungen, Achsanzahl, Inhaberschaft, Insassenzahl usw. enthalten, welche die verrechnete Mautgebühr bestimmen.

Der Gültigkeitszeitraum kann systemweit vorgegeben bzw. vereinbart oder jeweils individuell von jeder Bake festgesetzt werden, um z.B. die unterschiedliche gegenseitige Entfernung der Baken zu berücksichtigen. So wird beispielsweise eine Bake, welche weit vor einer nächsten liegt, einen längeren Gültigkeitszeitraum festlegen und in den Datensatz der Onboard-Unit schreiben, wogegen eine Bake, die kurz vor einer nächsten liegt, einen kürzeren Gültigkeitszeitraum festsetzt.

Gemäß einer weiteren bevorzugten Ausgestaltung der Erfindung werden mit dem aktualisierten Datensatz eine Kennung und ein Zeitstempel der Bake in der Onboard-Unit gespeichert. Dies kann als Beleg für den Transaktionsvorgang einer Bake in der Onboard-Unit protokolliert und für Enforcement-Zwecke ausgelesen werden.

Besonders günstig ist es, wenn die Kennungen und Zeitstempel zumindest jener Baken, die seit der letzten Rücksetzung des Mautgebührenstandes von einer Onboard-Unit passiert wurden, in der Onboard-Unit in einem verschlüsselten Transaktionsprotokoll gespeichert werden, welches von den Baken mitausgelesen und beim Senden eines Datensatzes an die Zentrale an diese mitgesendet wird. Der Schlüssel für das Verschlüsseln des Transaktionsprotokolls wird beispielsweise vom Benutzer der Onboard-Unit selbst gewählt oder nur ihm bekanntgegeben. Das an die Zentrale gesandte verschlüsselte Transaktionsprotokoll kann in Streitfällen vom Benutzer - und nur von diesem - zu Beweiszwecken entschlüsselt werden, was die Benutzerakzeptanz erhöht, ohne den Datenschutz gegenüber der Zentrale zu beeinträchtigen.

Das Verfahren der Erfindung eignet sich für jede Art von Straßenmautsystem mit geografisch verteilten, verortenden Baken, beispielsweise Baken, die Onboard-Units auf optischem Wege auf ihren Bakenort lokalisieren können. Besonders eignet sich das Verfahren der Erfindung für Straßenmautsysteme, bei denen die Baken mit den sie passierenden Onboard-Units über Funkverbindungen mit begrenztem Funkabdeckungsbereich kommunizieren und dadurch die Onboard-Units auf ihren jeweiligen Funkabdeckungsbereich als Bakenort lokalisieren, was hohe Zuverlässigkeit ergibt.

Die Erfindung wird nachstehend anhand von in den beigeschlossenen Zeichnungen dargestellten Ausführungsbeispielen näher erläutert. In den Zeichnungen zeigt:
Fig. 1 schematisch ein Straßenmautsystem, im Rahmen dessen das Verfahren der Erfindung abgewickelt wird, in Verbindung mit einer grafischen Darstellung von Daten in einer Onboard-Unit zu verschiedenen Zeitpunkten des Verfahrens der Erfindung;
Fig. 2 ein Flussdiagramm des in den Baken des Straßenmautsystems von Fig. 1 ablaufenden Teils des Verfahrens der Erfindung; und
Fig. 3 ein Flussdiagramm des in der Zentrale des Straßenmautsystems von Fig. 1 ablaufenden Teils einer speziellen Ausführungsform des Verfahrens der Erfindung.

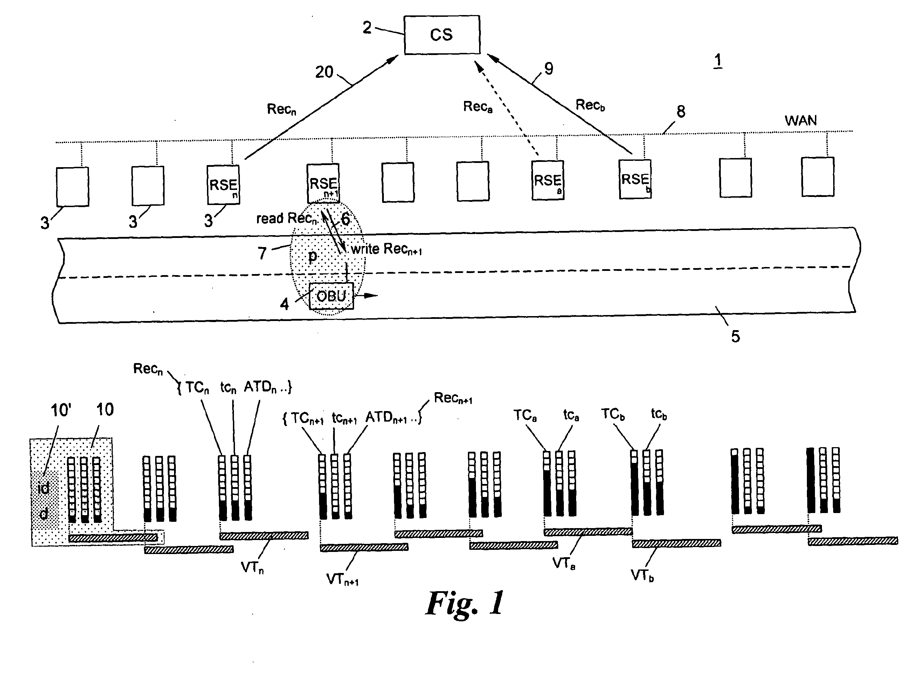

In Fig. 1 ist schematisch ein Straßenmautsystem 1 dargestellt, welches eine Zentrale ("central system", CS) 2 und eine Vielzahl geografisch verteilter Baken ("road side equipment", RSE) 3 umfasst, die mit Fahrzeuggeräten bzw. Onboard-Units (OBUs) 4 zusammenwirken. Die Onboard-Units 4 werden von Fahrzeugen (nicht gezeigt) mitgeführt, die sich auf einem Straßennetz 5 bewegen. Mit Hilfe der Baken 3 und Onboard-Units 4 wird eine ortsbezogene zeit- und/oder wegabhängige Maut für die Fahrzeuge ermittelt und in der Zentrale 2 abgerechnet.

Zu diesem Zweck kann jede Bake 3 eine sie passierende Onboard-Unit 4 auf ihren Bakenort p lokalisieren ("verorten"), u.zw. indem sie eine Funkverbindung 6 mit einem auf den Bakenort p begrenzten Funkabdeckungsbereich 7 mit der Onboard-Unit 4 aufbaut: Eine erfolgreich hergestellte Funkverbindung 6 zeigt die Anwesenheit der Onboard-Unit 4 im Funkabdeckungsbereich 7 und damit am Bakenort p an.

Die Funkverbindung 6 erfolgt bevorzugt nach dem CEN DSRC-(dedicated short range communication), IEEE WAVE- (wireless access in a vehicle environment) oder ETSI ITS-G5 -Standard. Anstelle einer Funkverbindung 6 könnte auch eine andere drahtlose Kurzreichweiten-verbindung verwendet warden, z.B. eine Infrarotverbindung, Ultraschallverbindung usw.

Bei herkömmlichen Straßenmautsystemen erzeugt jede Bake 3, im Weiteren auch allgemein mit RSEₙ (n = 1, 2, 3, ...) bezeichnet, bei der Passage einer Onboard-Unit 4 einen Transaktions-Datensatz Recₙ für die Zentrale 2, welcher zumindest eine Kennung der Onboard-Unit 4 und eine Kennung der Bake 3 enthält, woraus - in Kenntnis der Bakenorte p - in der Zentrale 2 die Ortsnutzungen der Onboard-Unit 4 abgerechnet werden können. Um zu verhindern, dass auf diese Weise der Weg einer Onboard-Unit 4 auf dem Straßennetz 5 verfolgt werden kann, dient das nachfolgend beschriebene Verfahren der Erfindung. Dazu wird auch das Straßenmautsystem 1 wie folgt modifiziert.

Die Funkbaken 3 werden untereinander über ein erstes Netzwerk 8, z.B. ein LAN (local area network) oder WAN (wide area network) verbunden, sei es drahtgebunden oder drahtlos. Jede Bake 3 kann ferner über ein vom ersten Netzwerk 8 gesondertes zweites Netzwerk 9 Transaktions-Datensätze ReCₙ an die Zentrale 2 absetzen. Das zweite Netzwerk 9 kann ebenfalls ein LAN oder WAN sein, sowohl drahtgebunden als auch drahtlos. Die ersten und zweiten Netzwerke 8, 9 könnten sogar durch ein und dasselbe physische Netzwerk, z.B. das Internet, ein Mobilfunknetz, ein dediziertes Glasfaser-Netz usw. verbunden sein und lediglich logisch voneinander getrennt sein, z.B. durch gegeneinander abgesicherte Virtual Private Networks (VPNs), sofern dafür Vorsorge getroffen ist, dass die Zentrale 2 die Datenverbindungen der Baken 3 untereinander, d.h. das erste Netzwerk 8, nicht abhören kann.

In den einzelnen Onboard-Units 4 werden jeweils Speicher 10 eingerichtet, deren Inhalt in der unteren Hälfte von Fig. 1 schematisch zu verschiedenen Zeitpunkten, u.zw. jeweils unmittelbar nach der Passage einer Bake 3 bzw. RSEₙ entlang des Straßennetzes 5, veranschaulicht ist. Der Speicher 10 jeder Onboard-Unit 4 enthält zumindest einen Mautgebührenstand ATD ("aggregated toll debt") und einen Gültigkeitszeitraum VT ("validity time") VT, sowie optional einen Gesamtzähler TC ("transaction counter") und einen Abschnittszähler tc. Ein weiterer Bereich 10' des Speichers 10 kann z.B. semipermanente Daten enthalten, wie die Kennung id der Onboard-Unit 4 und fahrzeug- oder benutzerspezifische Zusatzdaten d.

Zu Beginn des Verfahrens, z.B. bei Erstauslieferung einer Onboard-Unit 4, sind der Mautgebührenstand ATD, der Gesamtzähler TC, der Abschnittszähler tc und der Gültigkeitszeitraum VT auf Null gesetzt.

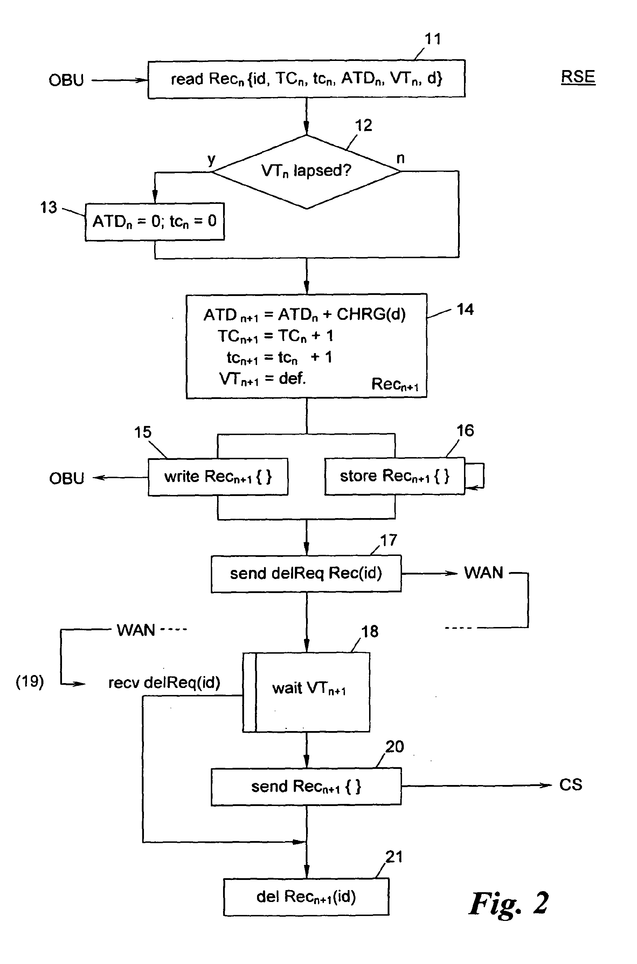

Fig. 2 zeigt das Verfahren, das jeweils in einer Bake 3, hier stellvertretend der Bake RSEₙ₊₁, des Straßenmautsystems 1 durchgeführt wird, wenn eine Onboard-Unit 4 sie passiert, d.h. in ihren Funkabdeckungsbereich 7 eintritt und vorübergehend eine Funkverbindung 6 mit ihr herstellt. Fig. 2 zeigt dabei nur den für das vorliegende Verfahren relevanten Teil des Kommunikationsprotokolls der Funkverbindung 6; bekannte Kommunikationsschritte wie Handshaking, Checksummen- und Bestätigungsübermittlungen usw. sind nicht dargestellt.

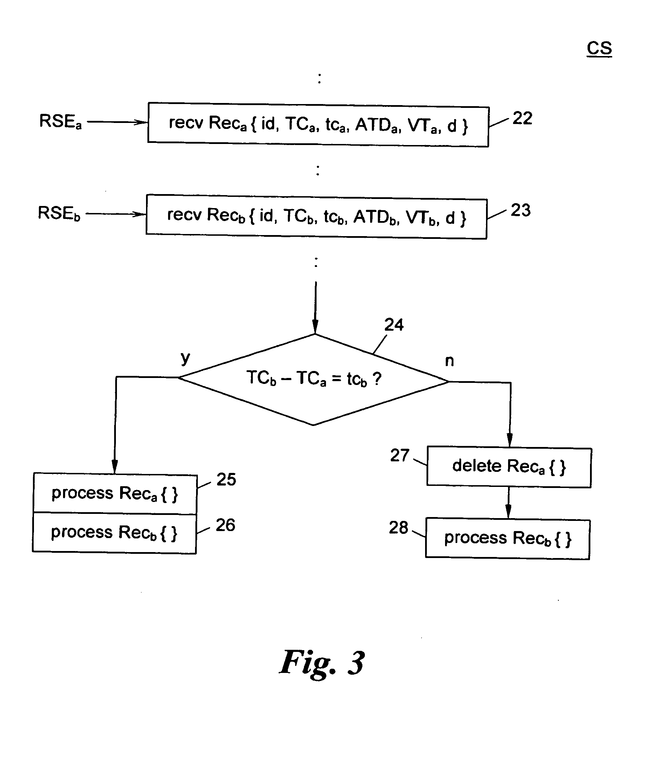

In einem ersten Schritt 11 wird von der Bake RSEₙ₊₁ der Inhalt des Speichers 10 einer passierenden Onboard-Unit 4 ausgelesen, u.zw. (zumindest) die Kennung id der Onboard-Unit 4, der zuletzt eingespeicherte Mautgebührenstand ATDₙ und dessen Gültigkeitszeitraum VTₙ. Optional können für eine später anhand von Fig. 3 beschriebene spezielle Ausführungsform des Verfahrens auch die letzten Gesamt- und Abschnittszähler TCₙ, tcₙ ausgelesen werden, doch ist dies in einer vereinfachten Ausführungsform nicht erforderlich; im einfachsten Fall können die nachfolgenden Bezugnahmen auf die Gesamt- und Abschnittszähler TC, tc entfallen. Auch die Zusatzdaten d können optional ausgelesen werden. Die ausgelesenen Daten {id, TCₙ, tcₙ, ATDₙ, VTₙ, d} werden in der Bake RSEₙ₊₁ in einem Datensatz Recₙ zusammengefasst.

In einem anschliessenden Schritt 12 wird überprüft, ob der ausgelesene Gültigkeitszeitraum VTₙ abgelaufen bzw. verstrichen ist. Dies kann auf verschiedene Arten realisiert werden: Beispielsweise gibt der Wert VTₙ einen absoluten Endzeitpunkt an, der mit der aktuellen Uhrzeit verglichen werden kann, oder er umfasst einen Startzeitpunkt und die Länge eines Gültigkeitszeitfensters, z.B. in Minuten (beispielsweise 5 Minuten). Der Gültigkeitszeitraum VTₙ gibt gleichsam die "Noch-Gültigkeit" des ausgelesenen Mautgebührenstandes ATDₙ an. Wenn der Gültigkeitszeitraum VTₙ verstrichen ist (Ast "y"), verzweigt der Entscheidungsschritt 12 zu einem Schritt 13, in dem sowohl der Mautgebührenstand ATDₙ als auch der optionale Abschnittszähler tcₙ auf 0 rückgesetzt werden; im anderen Fall (Ast "n") wird Schritt 13 übersprungen und direkt zum nächsten Schritt 14 vorangegangen.

Im Schritt 14 werden die folgenden Aktualisierungen vorgenommen:
- Der Mautgebührenstand ATDₙ wird um einen Wert CHRG, der einer Mautgebühr für die Benutzung des Orts p der Bake RSEₙ₊₁ entspricht, erhöht, um einen aktualisierten Mautgebührenstand ATDₙ₊₁ zu erzeugen. Der Wert CHRG kann ein fester vorgegebener Wert sein oder ein variabler Wert, welcher in Abhängigkeit von verschiedenen Kriterien bestimmt wird, z.B. abhängig vom Bakenort p; von aus der Onboard-Unit 4 ausgelesenen Speicherdaten d, welche beispielsweise die Fahrzeugklasse, die Abmessungen, das Gewicht, die Ladung oder die Insassenzahl usw. des Fahrzeugs angeben, das die Onboard-Unit 4 mitführt; und/oder von Messdaten, die die Bake RSEₙ₊₁ an der Onboard-Unit 4 bzw. deren Fahrzeug misst, z.B. dessen Abmessungen, Aussehen (Klasse), Gewicht, Geschwindigkeit, Insassenzahl usw.;
- der optionale Gesamtzähler TCₙ wird inkrementiert, um einen aktualisierten Gesamtzähler TCₙ₊₁ zu erzeugen;
- der optionale Abschnittszähler tcₙ wird inkrementiert, um einen aktualisierten Abschnittszähler tcₙ₊₁ zu erzeugen; und
- der Gültigkeitszeitraum VTₙ₊₁ kann (optional) neu festgelegt werden, z.B. abhängig vom Bakenort, von Messwerten des Fahrzeugs wie oben genannt, von ausgelesenen Speicherdaten d der Onboard-Unit 4, usw.

Am Ende des Schrittes 14 ergibt sich ein aktualisierter Datensatz Recₙ₊₁.

In anschliessenden Schritten 15 und 16, welche in beliebiger Reihenfolge oder parallel ablaufen können, wird der aktualisierte Datensatz Recₙ₊₁ einerseits in die Onboard-Unit 4 über die Funkverbindung 6 zurückgeschrieben (Schritt 15) und andererseits in der Bake RSEₙ₊₁ gespeichert (Schritt 16). Damit wird der neue Mautgebührenstand ATDₙ₊₁ auf zweifache Weise gesichert, u.zw. einerseits in der Onboard-Unit 4 und andererseits (temporär) in der Bake 3 bzw. RSEₙ₊₁.

In einem anschliessenden Schritt 17 kann daher nun eine Löschungsaufforderung delReq über das erste Datennetz 8 an alle übrigen Baken 3 - oder zumindest die unmittelbar im Straßenzug 5 vorausgehenden Baken 3 - gesandt werden, u.zw. unter Angabe der Kennung id der Onboard-Unit 4, um in all diesen Baken 3 dort gegebenenfalls noch gespeicherte Datensätze Rec(id) zu löschen. Wie diese Baken 3 mit einer solchen Löschungsaufforderung verfahren, kann gleich anhand der vorliegenden Bake RSEₙ₊₁ erläutert werden, da auch diese nun auf eine solche Löschungsaufforderung von anderen Baken wartet: Das Verfahren geht nun in einen Wartezustand 18 über, in welchem die Bake auf das Einlangen einer Löschungsaufforderung delReq (19) wartet, jedoch nur solange, bis der Gültigkeitszeitraum VTₙ₊₁ verstreicht. Mit anderen Worten wird der Wartezustand 18 entweder durch Ablaufen des Gültigkeitszeitraums VTₙ₊₁ oder durch Einlangen einer Löschungsaufforderung delReq beendet.

Wenn keine Löschungsaufforderung delReq einlangt, d.h. einfach der Gültigkeitszeitraum VTₙ₊₁ abläuft, wird in einem Schritt 20 der aktualisierte Datensatz Recₙ₊₁ über das zweite Datennetz 9 an die Zentrale 2 gesandt. Wenn jedoch während des Gültigkeitszeitraums VTₙ₊₁ eine Löschungsaufforderung delReq empfangen wird, wird Schritt 20 übersprungen und direkt zum abschliessenden Schritt 21 des Verfahrens verzweigt.

In dem abschliessenden Schritt 21 wird der in der Bake 3 gespeicherte aktualisierte Datensatz Recₙ₊₁ gelöscht. Das Verfahren in einer Bake 3, hier stellvertretend anhand der Bake RSEₙ₊₁ erklärt, ist damit abgeschlossen. Bei jeder Passage einer Onboard-Unit 4 an einer Bake 3 wird es erneut durchlaufen.

Dadurch ergeben sich bei aufeinanderfolgenden Passagen einer Onboard-Unit 4 an aufeinanderfolgenden Baken 3 (...RSEₙ₋₁, RSEₙ, RSEₙ₊₁...) die in der unteren Hälfte von Fig. 1 schematisch gezeigten Werte bzw. "Füllstände" von Mautgebührenstand ATD, Gesamtzähler TC und Abschnittszähler tc, welche jeweils für ihren Gültigkeitszeitraum VT gelten: Wie aus Fig. 1 ersichtlich, werden - wenn bei einer Bakenpassage der Gültigkeitszeitraum VT noch nicht abgelaufen ist - der Mautgebührenstand ATD erhöht und die Gesamt- und Abschnittszähler TC, tc inkrementiert, siehe die ersten drei Bakenpassagen. Bei der vierten Bakenpassage an der Bake RSEₙ₊₁ war der vorhergehende Gültigkeitszeitraum VTₙ bereits abgelaufen, so dass der Mautgebührenstand ATD und der Abschnittszähler tc rückgesetzt werden. Gleichzeitig war in der vorangegangenen Bake RSEₙ damit auch die Wartezeit VTₙ im Wartezustand 18 verstrichen, so dass die Bake RSEₙ ihren Datensatz Recₙ an die Zentrale 2 sendet (Schritt 20). Der abgesendete Datensatz Recₙ enthält einen über drei Bakenpassagen akkumulierten Mautgebührenstand ATDₙ, welcher keine Rückschlüsse mehr auf die einzelnen Baken 3 und damit deren Orte p zulässt, sodass Ortsanonymisierung durch abschnittsweise Akkumulierung erzielt wird.

In sehr seltenen Zeitkonstellationen kann es passieren, dass aufgrund der Latenz der Datenverarbeitung in den Baken 3 oder der Latenz der Datenübertragung zwischen den Baken 3 die von einer Folgebake RSE_{b} ausgesandte Löschungsaufforderung delReq in einer der vorangegangenen Baken RSEₐ zu spät einlangt, um dort die Absendung des Datensatzes zu unterdrücken, obwohl die Folgebake RSE_{b} den Gültigkeitszeitraum VT₀ als noch nicht abgelaufen beurteilt und den Mautgebührenstand ATD erhöht hat. Um solche latenzbedingten Fehler zu verhindern, dient die nun im Folgenden anhand von Fig. 3 beschriebene optionale Variante des Verfahrens.

Fig. 3 zeigt einen in der Zentrale 2 ablaufenden Verfahrensabschnitt, welcher den Gesamtzähler TC und den Abschnittszähler tc auswertet, um latenzbedingte Doppelsendungen von Datensätzen Recₐ, Rec_{b} zu berücksichtigen. Wenn zwei Datensätze Recₐ, Rec_{b} mit ein und derselben Kennung id in der Zentrale 2 einlangen (Schritte 22 und 23), dann wird in einem Entscheidungsschritt 24 überprüft, ob die Differenz TC_{b} - TCₐ der Gesamtzähler der beiden Datensätze Recₐ, Rec_{b} dem Abschnittszähler tc_{b} des zweiten Datensatzes Rec_{b}, d.h. des Datensatzes mit dem höheren Gesamtzähler TC_{b}, entspricht. Wenn ja (Ast "y"), dann ist alles in Ordnung und beide Datensätze Recₐ, Rec_{b} können in der Zentrale 2 verarbeitet werden, siehe Schritte 25 und 26. Wenn nein (Ast "n"), dann handelt es sich um einen Überlappungs- bzw. Doppelsendefall und der Datensatz Recₐ mit dem niedrigeren Gesamtzähler TCₐ wird gelöscht (Schritt 27) und nur der zweite Datensatz Rec_{b} verarbeitet (Schritt 28).

Wenn der Wert CHRG, um den der Mautgebührenstand ATD in Schritt 14 jeweils erhöht wird, ein fester vorgegebener Wert ist, kann auf die gesonderte Ausbildung des Abschnittszählers tc verzichtet werden, denn die abschnittsweise Anzahl tc an Transaktionen kann dann direkt aus dem Mautgebührenstand ATD, geteilt durch den genannten festen Wert, abgeleitet werden.

Im Schritt 15 kann in der Onboard-Unit 4 optional auch eine Kennung der Bake 3 und ein aktueller Zeitstempel als Beleg gespeichert werden. Die Belege werden in der Onboard-Unit 4 insbesondere in Form eines verschlüsselten Transaktionsprotokolls gespeichert. Der Schlüssel für die Verschlüsselung des Transaktionsprotokolls wird z.B. vom Benutzer der Onboard-Unit 4 selbst gewählt oder nur diesem bekanntgegeben. Das Transaktionsprotokoll kann z.B. im Schritt 11 aus einer Onboard-Unit 4 mitausgelesen werden und im Schritt 20 auch an die Zentrale 2 mitversandt werden, sodass sich dort verschlüsselte Transaktionsprotokolle ansammeln, welche nur vom jeweiligen Benutzer anhand seines Schlüssels zu Belegzwecken ausgelesen werden können.

Die Funkverbindungen 6, insbesondere alle in den Fig. 2 und 3 gezeigten Sende- und Empfangsschritte 11, 15, 20, 22, 23, werden bevorzugt verschlüsselt und/oder mit elektronischen Signaturen der Onboard-Units 4 bzw. Baken 3 versehen, um die Transaktionssicherheit zu erhöhen.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Ermitteln von Mautgebühren für Fahrzeuge in einem Straßenmautsystem (1), das fahrzeuggestützte Onboard-Units (4) mit jeweils einer eindeutigen Kennung (id) und örtlich verteilte Baken (3) mit jeweils einem bekannten Ort (p) umfasst, wobei die Baken (3) passierende Onboard-Units (4) auf ihren Bakenort (p) lokalisieren, um daraus eine ortsbezogene Mautgebühr zu berechnen, und über Funk (6) mit diesen kommunizieren können, umfassend:
in einer Onboard-Unit (4):
- Bereitstellen eines Speichers (10) für einen Mautgebührenstand (ATD) und einen Gültigkeitszeitraum (VT) hierfür in der Onboard-Unit (4);
bei der Passage der Onboard-Unit (4) an einer Bake (3), in der Bake (3):
- Auslesen (11) zumindest der Kennung (id), des Mautgebührenstandes (ATD) und des Gültigkeitszeitraums (VT) aus der Onboard-Unit (4) als Datensatz (Rec);
- wenn der Gültigkeitszeitraum (VT) abgelaufen ist: Rücksetzen (13) des Mautgebührenstandes (ATD);
- Erhöhen (14) des Mautgebührenstandes (ATD), um den Datensatz (Rec) zu aktualisieren, und Speichern (15, 16) des letzteren in der Onboard-Unit (4) und der Bake (3);
- Senden (17) einer Aufforderung (delReq) zur Löschung von gespeicherten Datensätzen (Rec) dieser Kennung (id) an andere Baken (3);
- wenn innerhalb des Gültigkeitszeitraums (VT) keine Löschungsaufforderung (delReq) für den gespeicherten Datensatz (Rec) von anderen Baken (3) einlangt: Senden (20) des Datensatzes (Rec) von der Bake (3) an die Zentrale (2);
- Löschen (21) des Datensatzes (Rec) in der Bake (3).

2. Verfahren nach Anspruch 1, wobei die Baken (3) untereinander über ein erstes Netzwerk (8) und mit einer Zentrale (2) des Straßenmautsystems über ein zweites Netzwerk (9) in Verbindung stehen, **dadurch gekennzeichnet, dass** das Senden (17) der Löschungsaufforderung (delReq) an die anderen Baken (3) über das erste Netzwerk (8) und das Senden (20) des Datensatzes (Rec) an die Zentrale (2) über das zweite Netzwerk (9) erfolgt.

3. Verfahren nach Anspruch 1 oder 2, **gekennzeichnet durch**
in der Onboard-Unit:
- Bereitstellen eines Speichers (10) für einen Gesamtzähler (TC) und einen Abschnittszähler (tc) in der Onboard-Unit (4);
in der Bake (3):
- Auslesen (11) des Gesamt- und des Abschnittszählers (TC, tc) aus der Onboard-Unit (4) in den Datensatz (Rec);
- Rücksetzen (13) des Abschnittszählers (tc), wenn der Gültigkeitszeitraum (VT) abgelaufen ist;
- Erhöhen (14) des Gesamt- und des Abschnittszählers (TC, tc) beim Aktualisieren (14) des Datensatzes (Rec) und Speichern (15, 16) des letzteren in der Onboard-Unit (4) und der Bake (3);
in der Zentrale (2), wenn zwei Datensätze (Recₐ, Rec_{b}) mit derselben Kennung (id) einlangen:
- Löschen (27) des Datensatzes (Recₐ) mit dem niedrigeren Gesamtzähler (TCₐ), wenn die Differenz der Gesamtzähler (TCₐ, TC_{b}) beider Datensätze (Recₐ, Rec_{b}) ungleich dem Abschnittszähler (TC_{b}) des Datensatzes (Rec_{b}) mit dem höheren Gesamtzähler (TC_{b}) ist.

4. Verfahren nach Anspruch 3, **dadurch gekennzeichnet, dass** der Mautgebührenstand (ATD) beim Erhöhen um einen festen Wert (CHRG) erhöht und der Abschnittszähler (tc) durch den Mautgebührenstand (ATD), geteilt durch den genannten festen Wert (CHRG), gebildet wird.

5. Verfahren nach einem der Ansprüche 1 bis 4, **dadurch gekennzeichnet, dass** der Mautgebührenstand (ATD) beim Erhöhen um einen variablen Wert (CHRG) erhöht wird, welcher abhängig von Messdaten, die an einem die Onboard-Unit (4) mitführenden Fahrzeug gemessen werden, bestimmt wird.

6. Verfahren nach einem der Ansprüche 1 bis 5, **dadurch gekennzeichnet, dass** der Mautgebührenstand (ATD) beim Erhöhen um einen variablen Wert (CHRG) erhöht wird, welcher abhängig von Speicherdaten (d), die aus der Onboard-Unit (4) ausgelesen werden, bestimmt wird.

7. Verfahren nach einem der Ansprüche 1 bis 6, **dadurch gekennzeichnet, dass** beim Aktualisieren (14) des Datensatzes (Rec) der Gültigkeitszeitraum (VT) auf einen bakenspezifischen Wert (def) gesetzt wird.

8. Verfahren nach einem der Ansprüche 1 bis 7, **dadurch gekennzeichnet, dass** mit dem aktualisierten Datensatz (Rec) eine Kennung und ein Zeitstempel der Bake (3) in der Onboard-Unit (4) gespeichert werden.

9. Verfahren nach Anspruch 8, **dadurch gekennzeichnet, dass** die Kennungen und Zeitstempel zumindest jener Baken (3), die seit der letzten Rücksetzung (13) des Mautgebührenstandes (ATD) von einer Onboard-Unit (4) passiert wurden, in der Onboard-Unit (4) in einem verschlüsselten Transaktionsprotokoll gespeichert werden, welches von den Baken (3) mitausgelesen (11) und beim Senden (20) eines Datensatzes (Rec) an die Zentrale (2) an diese mitgesendet wird.

10. Verfahren nach einem der Ansprüche 1 bis 9, **dadurch gekennzeichnet, dass** eine Bake (3) mit einer passierenden Onboard-Unit (4) über eine Funkverbindung (6) mit begrenztem Funkabdeckungsbereich (7) kommuniziert und dadurch die Onboard-Unit (4) auf den Funkabdeckungsbereich (7) als Bakenort (p) lokalisiert.

## Claims

1. A method for determining toll fees for vehicles in a road toll system (1) comprising vehicle-supported onboard units (4) with respective unambiguous identifiers (id) and positionally distributed beacons (3) with known locations (p), wherein the beacons (3) localize passing onboard units (4) to their beacon location (p) in order to calculate a position-related toll fee therefrom, and can communicate with the onboard units via radio (6), the method comprising:
in an onboard unit (4):
- providing a memory (10) for a toll fee level (ATD) and a validity time frame (VT) therefor in the onboard unit (4);
in a beacon (3) during the passage of the onboard unit (4) past the beacon (3):
- reading out (11) at least the identifier (id), the toll fee level (ATD) and the validity time frame (VT) from the onboard unit (4) as a data record (Rec);
- if the validity time frame (VT) has expired: resetting (13) the toll fee level (ATD);
- increasing (14) the toll fee level (ATD) in order to update the data record (Rec) and storing (15, 16) the latter in the onboard unit (4) and the beacon (3);
- transmitting (17) a request (delreq) for deletion of stored data records (Rec) for this identifier (id) to other beacons (3);
- if no request (delReq) for deletion of the stored data record (Rec) arrives from other beacons (3) during the validity time frame (VT): transmitting (20) the data record (Rec) from the beacon (3) to the central station (2);
- deleting (21) the data record (Rec) in the beacon (3).

2. The method according to Claim 1, wherein the beacons (3) are connected to one another via a first network (8) and to a central station (2) of the road toll system via a second network (9), **characterized in that** the transmitting (17) of the deletion request (delReq) to the other beacons (3) takes place via the first network (8) and the transmitting (20) of the data record (Rec) to the central station (2) takes place via the second network (9).

3. The method according to Claim 1 or 2, **characterized by**
in the onboard unit:
- providing a memory (10) for a total counter (TC) and a section counter (tc) in the onboard unit (4);
in the beacon (3):
- reading out (11) the total counter and the section counter (Tc, tc) from the onboard unit (4) into the data record (Rec);
- resetting (13) the section counter (tc) when the validity time frame (VT) has expired;
- incrementing (14) the total counter and the section counter (TC, tc) when updating (14) the data record (Rec), and storing (15, 16) the latter in the onboard unit (4) and the beacon (3);
in the central station (2), if two data records (Recₐ, Rec_{b}) with the same identifier (id) arrive:
- deleting (27) the data record (Recₐ) with the lower total counter (TCₐ), if the difference between the total counters (TCₐ, TC_{b}) of the two data records (Recₐ, Rec_{b}) is not equal to the section counter (tc_{b}) of the data record (Rec_{b}) with the higher total counter (TC_{b}).

4. The method according to Claim 3, **characterized in that** when increasing the toll fee level (ATD) it is incremented by a fixed value (CHRG) and the section counter (tc) is formed from the toll fee level (ATD), divided by the above-mentioned fixed value (CHRG).

5. The method according to one of Claims 1-4, **characterized in that** when increasing the toll fee level (ATD) it is incremented by a variable value (CHRG) that is determined based on measurement data measured on a vehicle carrying the onboard unit (4).

6. The method according to one of Claims 1-5, **characterized in that** when increasing the toll fee level (ATD) it is incremented by a variable value (CHRG) that is determined based on stored data (d) read out of the onboard unit (4).

7. The method according to one of Claims 1-6, **characterized in that** when updating (14) the data record (Rec) the validity time frame (VT) is set to a beacon-specific value (def).

8. The method according to one of Claims 1-7, **characterized in that** an identifier and a time stamp of the beacon (3) are stored in the onboard unit (4) along with the updated data record (Rec).

9. The method according to Claim 8, **characterized in that** the identifiers and time stamps of at least those beacons (3) that were passed by an onboard unit (4) since the last reset (13) of the toll fee level (ATD) are stored in the onboard unit (4) in an encrypted transaction log, which is read out (11) by the beacons (3) and sent (20) to the central station (2) when the data record (Rec) is transmitted.

10. The method according to one of Claims 1-9, **characterized in that** a beacon (3) communicates with a passing onboard unit (4) via a radio connection (6) with a limited coverage range (7) and thereby localizes the onboard unit (4) to the radio coverage range (7) as the beacon location (p).

## Revendications

1. Procédé servant à déterminer des frais de péage pour des véhicules dans un système de péage routier (1), qui comprend des unités embarquées (4) opérant selon le véhicule dotées respectivement d'une identification (id) univoque et des balises (3) réparties localement associées respectivement à un lieu (p) connu, dans lequel les balises (3) localisent des unités embarquées (4) passant à leur niveau sur leur lieu (p) afin de calculer à partir de ces données des frais de péages en fonction du lieu et sont en mesure de communiquer avec lesdites unités embarquées par voie radio (6), comprenant :
dans une unité embarquée (4):
- mettre à disposition une mémoire (10) pour un niveau des frais de péage (ATD) et pour une période de validité (VT) à cet effet dans l'unité embarquée (4) ;
lors du passage de l'unité embarquée (4) au niveau d'une balise (3), dans la balise (3):
- lire (11) au moins l'identification (id), le niveau des frais de péage (ATD) et la période de validité (VT) depuis l'unité embarquée (4) comme jeu de données (Rec) ;
- lorsque la période de validité (VT) est arrivée à échéance : réinitialiser (13) le niveau des frais de péage (ATD) ;
- augmenter (14) le niveau des frais de péage (ATD) pour mettre à jour le jeu de données (Rec), et mémoriser (15, 16) ce dernier dans l'unité embarquée (4) et dans la balise (3) ;
- envoyer (17) une instruction (delReq) aux fins de la suppression des jeux de données (Rec) mémorisés de ladite identification (id) à d'autres balises (3) ;
- lorsqu'aucune instruction de suppression (delReq) pour le jeu de données (Rec) mémorisé n'arrive en provenance d'autres balises (3) dans le cadre de la période de validité (VT) : envoyer (20) le jeu de données (Rec) depuis la balise (3) à la centrale (2) ;
- supprimer (21) le jeu de données (Rec) dans la balise (3).

2. Procédé selon la revendication 1, dans lequel les balises (3) sont reliées entre elles par l'intermédiaire d'un premier réseau (8) et sont reliées à une centrale (2) du système de péage routier par l'intermédiaire d'un deuxième réseau (9), **caractérisé en ce que** l'envoi (17) de l'instruction de suppression (delReq) aux autres balises (3) est effectué par l'intermédiaire du premier réseau (8), et **en ce que** l'envoi (20) du jeu de données (Rec) à la centrale (2) est effectué par l'intermédiaire du deuxième réseau (9).

3. Procédé selon la revendication 1 ou 2, **caractérisé par** :
dans l'unité embarquée:
- mettre à disposition une mémoire (10) pour un compteur global (TC) et pour un compteur de tronçon (tc) dans l'unité embarquée (4) ;
dans la balise (3):
- lire (11) le compteur global et le compteur de tronçon (TC, tc) depuis l'unité embarquée (4) dans le jeu de données (Rec) ;
- réinitialiser (13) le compteur de tronçon (tc) lorsque la période de validité (VT) est arrivée à échéance ;
- augmenter (14) le compteur global et le compteur de tronçon (TC, tc) lors de la mise à jour (14) du jeu de données (Rec) et mémoriser (15, 16) ce dernier dans l'unité embarquée (4) et la balise (3) ;
dans la centrale (2) lorsque deux jeux de données (Recₐ, Rec_{b}) parviennent avec la même identification (id), l'étape consistant à :
- supprimer (27) le jeu de données (Recₐ) avec le compteur global le plus bas (TCₐ) lorsque la différence des compteurs globaux (TCₐ, TC_{b}) des deux jeux de données (Recₐ, Rec_{b}) n'est pas égale au compteur de tronçon (tc_{b}) du jeu de données (Rec_{b}) avec le compteur global (TC_{b}) le plus élevé.

4. Procédé selon la revendication 3, **caractérisé en ce que** le niveau des frais de péage (ATD) est augmenté d'une valeur fixe (CHRG) lors de l'augmentation, et **en ce que** le compteur de tronçon (tc) est formé par le niveau des frais de péage (ATD), divisé par ladite valeur fixe (CHRG).

5. Procédé selon l'une quelconque des revendications 1 à 4, **caractérisé en ce que** le niveau des frais de péage (ATD) est augmenté lors de l'augmentation d'une valeur variable (CHRG), laquelle est définie selon des données de mesure mesurées sur un véhicule comportant l'unité embarquée (4).

6. Procédé selon l'une quelconque des revendications 1 à 5, **caractérisé en ce que** le niveau des frais de péage (ATD) est augmenté lors de l'augmentation d'une valeur variable (CHRG), laquelle est définie selon des données mémorisées (d) lues depuis l'unité embarquée (4).

7. Procédé selon l'une quelconque des revendications 1 à 6, **caractérisé en ce que** lors de la mise à jour (14) du jeu de données (Rec), la période de validité (VT) est portée à une valeur (def) propre à une balise.

8. Procédé selon l'une quelconque des revendications 1 à 7, **caractérisé en ce qu'**une identification et une estampille temporelle de la balise (3) sont mémorisées dans l'unité embarquée (4) avec le jeu de données (Rec) mis à jour.

9. Procédé selon la revendication 8, **caractérisé en ce que** les identifications et les estampilles temporelles d'au moins ces balises (3), au niveau desquelles une unité embarquée (4) est passée depuis la dernière réinitialisation (13) du niveau des frais de péage (ATD), sont mémorisées dans l'unité embarquée (4) dans un protocole de transaction crypté, qui est lu (11) par les balises (3) et qui est envoyé à la centrale (2) lors de l'envoi (20) d'un jeu de données (Rec) à cette dernière.

10. Procédé selon l'une quelconque des revendications 1 à 9, **caractérisé en ce qu'**une balise (3) communique avec une unité embarquée (4) passant au niveau de cette dernière par l'intermédiaire d'une liaison radio (6) présentant une zone de couverture radio (7) limitée et localise ce faisant ladite unité embarquée (4) dans la zone de couverture radio (7) en tant que lieu de la balise (p).
